Europäisches Patentamt

European Patent Office

Office européen des brevets

(19)

(11)  EP 0 769 692 B1

## (12)  FASCICULE DE BREVET EUROPEEN

(45) Date de publication et mention
de la délivrance du brevet:
**18.09.2002  Bulletin 2002/38**

(51) Int Cl.[7]: **G01N 25/30**, G01N 27/62,
G01L 23/22, G01K 7/40

(21) Numéro de dépôt: **96402188.5**

(22) Date de dépôt: **15.10.1996**

(54) **Méthode et dispositif de détermination de la vitesse de propagation d'un front d'onde de température dans un gaz**

Verfahren und Vorrichtung zur Bestimmung der Laufzeitgeschwindigkeit einer thermischen Wellenfront

Method and apparatus for determining the propagation velocity of a thermal wave front

(84) Etats contractants désignés:
**BE DE ES FR GB**

(30) Priorité: **19.10.1995  FR 9512277**

(43) Date de publication de la demande:
**23.04.1997  Bulletin 1997/17**

(73) Titulaire: **ELF ANTAR FRANCE**
**92400 Courbevoie (FR)**

(72) Inventeur: **Labruyere, Yvan**
**38122 Montseveroux (FR)**

(74) Mandataire: **Cabinet Hirsch**
**34, Rue de Bassano**
**75008 Paris (FR)**

(56) Documents cités:
WO-A-89/03520        FR-A- 2 433 105
GB-A- 2 131 177        GB-A- 2 175 703

• **REVIEW OF SCIENTIFIC INSTRUMENTS, vol. 51, no. 11, Novembre 1980, ISSN 0034-6748, pages 1482-1484, XP002008291 SENGUPTA D ET AL: "Direct display of electron temperature oscillation in a plasma"**
• **INTERNATIONAL LABORATORY, vol. 14, no. 7, Septembre 1984, ISSN 0010-2164 , pages 50-56, XP002008292 DOKTER T ET AL: "Microprocessor-based technique for measuring flame speeds and other fast phenomena"**

EP 0 769 692 B1

**Description**

L'étude de la combustion dans les moteurs d'automobiles nécessite la connaissance d'une des propriétés intrinsèques importantes d'un mélange combustible qu'est la vitesse laminaire de propagation de la flamme.

Cette vitesse dépend de la composition du mélange, de sa température et de sa pression.

Un dispositif de mesure de cette vitesse, est décrit dans le document "LA COMBUSTION DANS LES MOTEURS D'AUTOMOBILE", du colloque du groupement scientifique moteurs, Rueil Malmaison (France), du 5 novembre 1987 publié par les Editions Technip Paris.

Ce dispositif comporte un moteur expérimental dérivé de la production, conçu de manière à permettre un accès optique à la chambre de combustion, notamment au travers d'une fenêtre à quartz, un générateur de faisceau laser, des moyens optiques de traitement de ce faisceau et une caméra rapide.

Ce dispositif permet de visualiser la progression de la flamme dans la chambre de combustion et par interprétation des images enregistrées de déterminer la vitesse de propagation de la flamme.

Ce dispositif est très couteux, il est aussi difficile et long à mettre en oeuvre. Il ne permet pas de mesurer la vitesse de propagation de la flamme dans la chambre de combustion d'un moteur sans modifications importantes de celui-ci, ni de suivre l'évolution de cette vitesse en fonction par exemple, des paramètres de réglage du moteur ou du carburant.

Ce dispositif est également limité par la vitesse d'enregistrement de la caméra rapide. Pratiquement il est limité à l'observation de phénomènes sur des moteurs tournant à des vitesses inférieures à 5000 tr/mn.

Une méthode connue pour la détermination de la vitesse d'un front de flamme est celle dite, de l'enceinte sphérique. Elle permet de réaliser à partir d'un point d'ignition central, une combustion à volume constant et un front de flamme dont on suppose qu'il reste au cours du temps, de forme sphérique lisse et symétrique par rapport au centre de l'enceinte.

La vitesse du front de flamme est calculée à partir de la mesure de la pression dynamique dans l'enceinte et au moyen d'un modèle dynamique de combustion, qui fait intervenir les paramètres caractéristiques du mélange combustible.

Cette méthode n'est pas transposable à la mesure de la vitesse de propagation d'un front de flamme dans une enceinte de volume variable, telle que la chambre de combustion d'un moteur thermique ou une turbine à gaz.

Elle est par conséquent mal adaptée à l'étude des carburants et des moteurs.

**EXPOSE DE L'INVENTION**

La présente invention a justement pour objet de remédier à ces inconvénients, et notamment de fournir une méthode et un dispositif de détermination de la vitesse de propagation d'un front d'onde de température dans un gaz contenu dans une enceinte notamment à volume variable.

Cette méthode et ce dispositif sont utilisables dans les centres d'essais de moteurs, des turbines à gaz et des compresseurs. Ils permettent l'étude de ces appareils en fonction des paramètres de réglage et de fonctionnement, ainsi que l'étude des combustibles et carburants qui les alimentent.

Cette méthode et ce dispositif sont faciles à mettre en oeuvre, ils ne nécessitent pas de modifications importantes des enceintes dans lesquelles on effectue la mesure de vitesse de propagation du front de température ni l'utilisation de modèles mathématiques complexes pour calculer la vitesse à partir des grandeurs mesurées.

A cette fin l'invention propose une méthode de détermination de la vitesse d'un front d'onde de température dans un gaz contenu dans une enceinte selon la revendication 1. L'invention a aussi pour objet un dispositif pour mettre en oeuvre cette méthode selon la revendication 2.

Les caractéristiques des préambules sont connus de la demande de brevet d'invention française FR-A-2433106. L'emploi des sondes thermoémissives pour mesurer la température des électrons dans un plasma de gaz a été décrit dans le document REVIEW OF SCIENTIFIC INSTRUMENTS, vol. 51, no. 11, novembre 1980, pages 1482-1484, ISSN 0034-6748. Enfin selon un mode particulier du dispositif de l'invention, l'enceinte est une chambre de combustion d'un moteur thermique comprenant, au moins un cylindre à l'intérieur duquel circule un piston, fermé à une de ses extrémités par une culasse sur laquelle est montée au moins une bougie d'allumage, le front d'onde de température étant créé par la combustion d'un mélange combustible injecté dans la chambre de combustion et enflammé par la bougie d'allumage, les sondes de détection de charges électriques étant montées sur ladite culasse.

**BREVE DESCRIPTION DES DESSINS**

L'invention sera mieux comprise à l'aide des dessins annexés dans lesquels :

-   la figure 1, représente schématiquement les éléments constitutifs du dispositif de l'invention
-   les figures 2a et 2b, présentent les éléments d'un dispositif de mesure de la vitesse de propagation d'un front d'onde de température dans une culasse de moteur thermique, respectivement en coupe longitudinale et en coupe transversale
-   la figure 3 représente un chronogramme des signaux émis par les sondes de détection de charges électriques.

## EXPOSE DETAILLE DE L'INVENTION

D'une manière générale la méthode et le dispositif de l'invention sont utilisés pour déterminer la vitesse de propagation d'un front d'onde de température dans un gaz chaud contenu dans une enceinte.

Ils conviennent pour des enceintes de volume constant ou variable.

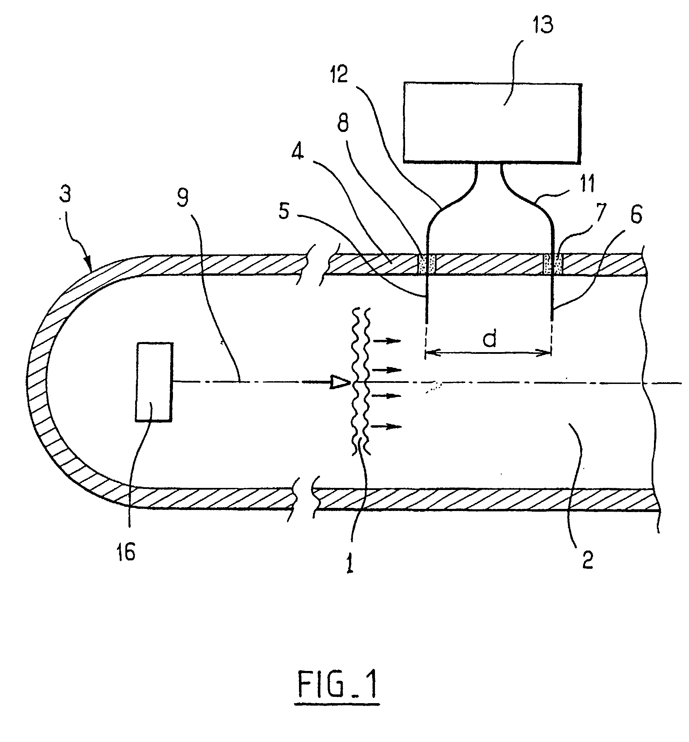

La figure 1 représente un mode de réalisation du dispositif de l'invention qui comporte :

- une enceinte 3 qui délimite un espace 2 contenant un gaz
- des moyens 16 de production d'au moins un front 1 d'onde de température
- deux sondes 5 et 6 de détection de charges électriques montées sur la paroi 4 de l'enceinte 3
- des traversées 7 et 8 isolantes de la paroi 4
- des moyens 13 électroniques de mesure
- des moyens 11 et 12 de liaison électriques des sondes 5 et 6 aux moyens 13 électroniques de mesure

Le dispositif comporte aussi non représentés des moyens d'introduction d'un mélange combustible gazeux dans l'enceinte 3 et des moyens d'échappement des gaz brûlés deladite l'enceinte.

Les sondes 5 et 6 à détection de charges électriques sont disposées selon un axe 9 de propagation du front 1 d'onde de température, à une distance d l'une de l'autre.

Les sondes 5 et 6 sont raccordées électriquement aux moyens 13 électroniques de mesure par les moyens 11 et 12 de raccordement électrique.

Les fronts d'onde de température, générés par les moyens 16 de production des fronts d'onde dans le gaz 2, se propagent selon l'axe 9.

Un front d'onde de température est caractérisé par la présence de charges électriques libres dans le gaz chaud qui modifient localement la valeur du champ électrique.

Quand un front d'onde passe au droit des sondes 5 et 6, des courants électriques sont induits dans chacune d'elles.

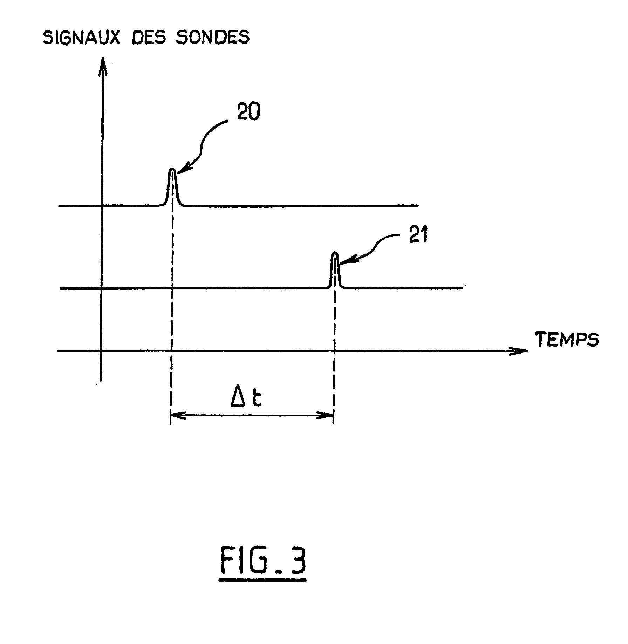

Les signaux émis par ces passages d'un front d'onde de température dans les sondes 5 et 6 ont la forme d'impulsions telles que celles représentées sur la figure 3.

Le temps $\Delta$t qui sépare les impulsions émises respectivement par les sondes 5 et 6 est mesuré par les moyens 13 électroniques.

La vitesse de propagation du front d'onde de température est par définition donnée par la relation :

$$v = d/\Delta t$$

dans laquelle

v représente la vitesse de propagation selon l'axe 9 du front d'onde de température en cm/s

d représente la distance qui sépare les sondes en cm

$\Delta$t représente le temps qui sépare les signaux émis par les sondes au passage du front d'onde en secondes

Cette vitesse peut être calculée automatiquement par les moyens 13 électroniques de mesure grâce à un logiciel adapté.

Selon l'invention les sondes 5 et 6 de détection de charges électriques, sont des sondes thermoémissives.

Ces sondes exploitent le phénomène de thermoémissivité des métaux. Un métal donné est caractérisé par l'énergie W, appelée énergie de sortie qui correspond à l'énergie qu'il faut fournir à une électron de la bande conduction de ce métal, pour que cet électron quitte le métal.

A titre d'exemple, on peut donner la valeur W pour les métaux suivants :

| Césium | W | = | 1,8 eV |
|---|---|---|---|
| Potassium | W | = | 2,2 eV |
| Molybdène | W | = | 4,4 eV |
| Or | W | = | 4,9 eV |
| Nickel | W | = | 5,05 eV |
| (1 eV équivaut à $0,16.10^{-18}$ joules) | | | |

L'énergie d'agitation thermique de chaque électron de la bande de conduction d'un métal croit avec sa température. Cette énergie peut devenir supérieure à W pour certains d'entre eux qui peuvent quitter le métal, animés d'une certaine vitesse.

Si dans le voisinage du métal émissif règne un champ électrique qui s'oppose à la sortie des électrons si ce champ à une valeur suffisante, il repoussera les électrons vers le métal.

Au contraire si le champ est accélérateur, la sortie des électrons du métal sera facilitée et un courant électrique circulera dans le métal.

C'est ce que l'on observe au passage d'un front d'onde de température au voisinage d'une sonde thermoémissive.

Sur la figure 3 sont représentées les impulsions 20 et 21 de courant électrique émises l'une après l'autre par chacune des sondes 5 et 6 en fonction du temps, au passage du front de température au droit de chacune d'elles.

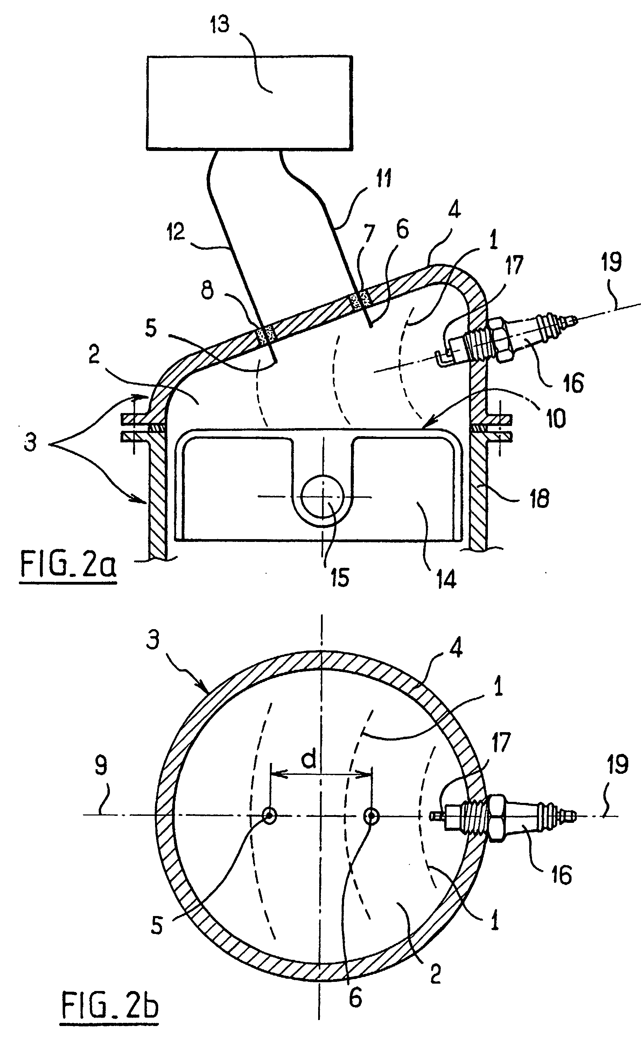

Selon un mode particulier de réalisation de l'invention, représenté schématiquement par les figures 2a et 2b, le dispositif de l'invention est appliqué à la détermination de la vitesse de propagation du front d'onde de température qui se déplace dans la chambre 2 de combustion d'un moteur thermique qui comporte :

- un cylindre 18 de diamètre sensiblement égal à 54 mm
- un piston 14
- une culasse 4
- une bougie 16 d'allumage avec son électrode 17 isolée
- deux sondes 5 et 6 de détection de charges électriques montées sur la culasse 4
- des traversées 7 et 8 isolantes de la culasse 4
- des moyens 13 électroniques de mesure
- des moyens 11 et 12 de liaison électrique des sondes 5 et 6 aux moyens 13 électroniques de mesure.

Le moteur thermique comporte d'autres éléments indispensables à son fonctionnement, non représentés, notamment des moyens d'injection du mélange air-carburant dans la chambre 2 et des soupapes d'échappement des gaz brûlés.

La chambre 2 de combustion est délimitée par la face 10 supérieure du piston 14, la face interne du cylindre 18, et la face interne de la culasse 4.

Le volume de la chambre 2 de combustion varie en fonction de la position du piston 14 dans le cylindre 18.

Les sondes 5 et 6 sont montées sensiblement dans le plan normal à l'axe 15 du piston passant par l'axe 19 de la bougie 16. L'électrode 17 de la bougie 16 est également dans le même plan.

Les sondes 5 et 6 seront avantageusement des sondes thermoémissives, en forme d'aiguille de diamètre compris entre 0,3 et 2 mm et de préférence égal à 0,5 mm, dont la partie saillante à l'intérieur de la chambre 2 de combustion est comprise entre 1 et 2 mm. La distance entre les sondes 5 et 6 est par exemple de 25 mm.

D'autres formes de sonde seront facilement réalisées par l'homme du métier, par exemple des cylindres de diamètre égal à 4 mm dont la partie saillante à l'intérieur de la chambre 2 de combustion est sensiblement égale à 0,5 mm.

Ces sondes de par leurs petites dimensions sont facilement montables sur la plupart des moteurs dont elles ne perturbent pratiquement pas le fonctionnement.

Pour étudier la propagation du front d'onde de température dans un plan paralléle à la façe 10 supérieure du piston, plusieurs sondes, par exemple 6 sont montées à la périphérie de la culasse.

## Revendications

1. Méthode de détermination de la vitesse de propagation d'un front d'onde de température dans un gaz contenu dans une enceinte(3), consistant à mesurer le temps qui s'écoule entre le passage du front d'onde, au droit de deux sondes (5) et (6) montées sur une paroi (4) de ladite enceinte (3), disposées sensiblement selon un axe (9) de propagation dudit front d'onde et séparées par une distance (d) connue, **caractérisé en ce que** les sondes sont des sondes thermoémissives de détection de charges électriques ayant des temps de réponses inférieurs à 10 microsecondes.

2. Dispositif pour la détermination de la vitesse de propagation d'un front d'onde de température dans un gaz comportant d'une part une enceinte (3) contenant ledit gaz munie de moyens (16) de production d'un front d'onde de température, et d'autre part au moins deux sondes (5) et (6), fixées à une paroi (4) de ladite enceinte (3), disposées sensiblement selon un axe (9) de propagation du front d'onde, séparées par une distance (d) connue, lesdites sondes (5) et (6) thermoémissives étant raccordées à des moyens (13) électroniques de mesure du temps, qui sépare les signaux qu'elles émettent successivement aux instants de passages du front d'onde de température au droit de chacune d'elles, **caractérisé en ce que** les sondes sont des sondes thermoémissives de détection de charges électriques ayant des temps de réponses inférieurs à 10 microsecondes.

3. Dispositif selon la revendication 2 **caractérisé en ce que** l'enceinte (3) est une chambre de combustion d'un moteur thermique comprenant, au moins un cylindre (18) à l'intérieur duquel circule un piston (14), fermé à une de ses extrémités par une culasse (4) sur laquelle est montée au moins une bougie (16) d'allumage, le front d'onde de température étant créé par la combustion d'un mélange combustible injecté dans la chambre (2) de combustion et enflammé par la bougie (16) d'allumage, les sondes (5) et (6) thermoémissives de détection de charges électriques étant montées sur ladite culasse (4).

## Patentansprüche

1. Verfahren zum Bestimmen der Ausbreitungsgeschwindigkeit einer Temperatur-Wellenfront in einem in einer Umschließung (3) enthaltenen Gas, bestehend aus der Messung der Zeit, die zwischen dem Vorbeigang der Wellenfront an zwei Sonden (5) und (6) verstreicht, welche an einer Wand (4) der Umschließung (3) etwa auf einer Ausbreitungsachse (9) der Wellenfront angeordnet und durch eine bekannte Strecke (d) voneinander getrennt sind, **dadurch gekennzeichnet, daß** die Sonden Thermoemissionssonden zum Erfassen elektrischer Ladungen mit Ansprechzeiten unter 10 Mikrosekunden sind.

**2.** Vorrichtung zur Bestimmung der Ausbreitungsgeschwindigkeit einer Temperatur-Wellenfront in einem Gas, umfassend einerseits eine das Gas enthaltende Umschließung (3), ausgestattet mit Mitteln (16) zum Erzeugen einer Temperatur-Wellenfront, und andererseits mindestens zwei Sonden (5) und (6), die an einer Wand (4) der Umschließung (3) etwa auf einer Ausbreitungsachse (9) der Wellenfront angeordnet und um eine bekannte Strecke (d) beabstandet sind, wobei die Thermoemissions-Sonden (5) und (6) mit einer elektronischen Zeitmeßeinrichtung (13) verbunden sind, welche die Zeit mißt, welche die Signale trennt, die sukzessive in den Zeitpunkten des Vorbeigangs der Temperatur-Wellenfront an den beiden Sonden erzeugt werden, **dadurch gekennzeichnet, daß** die Sonden Thermoemissions-Sonden zum Erfassen elektrischer Ladungen sind, deren Ansprechzeiten unter 10 Mikrosekunden liegen.

**3.** Vorrichtung nach Anspruch 2, **dadurch gekennzeichnet, daß** die Umschließung (3) eine Verbrennungskammer eines Verbrennungsmotors ist, der mindestens einen Zylinder (18) aufweist, in dessen Innerem ein Kolben (14) läuft, der an einem seiner Enden durch einen Zylinderkopf (4) verschlossen ist, an dem mindestens eine Zündkerze (16) gehaltert ist, wobei die Temperatur-Wellenfront erzeugt wird durch die Verbrennung eines brennfähigen Gemischs, das in die Verbrennungskammer (2) eingespritzt und von der Zündkerze (16) entflammt wird, wobei die Thermoemissions-Sonden (5) und (6) zum Erfassen elektrischer Ladungen an dem Zylinderkopf (4) gehaltert sind.

**Claims**

**1.** Method for determining the speed of propagation of a temperature wave front in a gas contained in an enclosed space (3), consisting in measuring the time which elapses between the passage of the wave front past two probes (5) and (6), mounted on a wall (4) of the said enclosed space (3), arranged substantially along an axis (9) of propagation of the said wave front and separated by a known distance (d) is measured, **characterized in that** the probes are thermionic electric-charge-detection probes which have response times of below 10 microseconds.

**2.** Device for determining the speed of propagation of a temperature wave front in a gas comprising, firstly, an enclosed space (3) containing the said gas and equipped with means (16) for producing a temperature wave front and, on secondly, at least two probes (5) and (6) fixed to a wall (4) of the said enclosed space (3), arranged substantially along an axis (9) of propagation of the wave front, separated by a known distance (d), the said probes (5) and (6) being connected to electronic time-measurement means (13) which separates the signals which they emit in turn at the moments the temperature wave front passes each of them, **characterized in that** the probes are thermionic electric-charge-detection probes which have response times of below 10 microseconds.

**3.** Device according to Claim 3 or 4, **characterized in that** the enclosed space (3) is a combustion chamber of a combustion engine comprising at least one cylinder (18) inside which there travels a piston (14), closed at one of its ends by a cylinder head (4) on which at least one spark plug (16) is mounted, the temperature wave front being created by the combustion of a combustible mixture injected into the combustion chamber (2) and ignited by the spark plug (16), the thermionic electric-charge detection probes (5)and (6) being mounted on the said cylinder head (4).

FIG.1

FIG. 2a

FIG. 2b

SIGNAUX DES SONDES

FIG. 3